# EUROPÄISCHE PATENTANMELDUNG

(11) **EP 1 508 553 A2**
(43) Veröffentlichungstag der Anmeldung: **23.02.2005**
(21) Anmeldenummer: 04450161.7
(22) Anmeldetag: 12.08.2004
(51) Int. Cl.: C04B 28/32, E04B 5/16

(54) **Pumpfähiger selbstnivellierender Magnesiaestrich sowie Verfahren zum Aufbringen dünnschichtiger Magnesiaestriche**

(30) Priorität: 19.08.2003 AT 5702003 U
(71) Anmelder: Styromagnesit Steirische Magnesitindustrie GmbH, 8611 St. Katharein/Laming (AT)
(72) Erfinder: Lechner, Manfred Dkfm., 1130 Wien (AT)
(74) Vertreter: Haffner, Thomas M.

(57) **Zusammenfassung**

Bei einem pumpfähigen selbstnivellierenden Magnesiaestrich enthaltend kaustisch gebrannte Magnesia, MgCl₂, Wasser und Quarzsand, werden organische Dispersionen im Verhältnis zu MgCl₂ in einer Menge von 1:4 bis 1:1 Gew.%-Teilen zugesetzt. In dem Verfahren zum Aufbringen dünnschichtiger Magnesiaestriche, bei welchem auf den trockenen und staubfreien Untergrund eine Haftbrücke aufgetragen und anschließend der Magnesiaestrich aufgetragen wird, werden als Haftbrücke Epoxidharze, insbesondere zweikomponentige Epoxidharze sowie eine pumpfähige, organische Dispersionen enthaltende Magnesiaestrichzusammensetzung aufgetragen, sobald die Haftbrücke transparent wird und noch klebrig ist.

## Beschreibung

Die Erfindung bezieht sich auf einen pumpfähigen selbstnivellierenden Magnesiaestrich enthaltend kaustisch gebrannte Magnesia, MgCl₂, Wasser und Quarzsand sowie auf ein Verfahren zum Aufbringen dünnschichtiger Magnesiaestriche, bei welchem auf den trockenen und staubfreien Untergrund eine Haftbrücke aufgetragen und anschließend der Magnesiaestrich aufgetragen wird.

Die bestehenden Rezepturen für pumpfähige selbstnivellierende Magnesiaestriche erlauben es nicht, dünnschichtige Gießbelege mit hoher Festigkeit herzustellen, wobei unter dünnschichtigen Belegen Belege mit einer Schichtstärke von etwa 5 mm oder darunter zu verstehen sind. Magnesiaestriche verfügen über eine Kapillarporösität, welche bei entsprechender Druck- oder Biegezugbelastung zu Rissbildung neigt, wobei konventionelle Magnesiaestriche Druckfestigkeiten von etwa 50 N/mm² und Biegezugfestigkeiten in der Größenordnung von 9 N/mm² erreichen. Ein weiteres Problem beim Auftragen von dünnen Schichten eines Magnesiaestrichs besteht darin, dass die üblichen zum Einsatz gelangenden Haftbrücken nur geringe Chloridbeständigkeit aufweisen, sodass es bei entsprechend dünnen Schichten leicht zu Blasenbildung und Oberflächenunregelmäßigkeiten kommt, welche wiederum die Riss- bzw. die Bruchgefahr begünstigen.

Die Erfindung zielt nun darauf ab, eine Rezeptur für einen Magnesiaestrich zu schaffen, welcher auch bei überaus dünnen Schichten eine verbesserte Biegezugfestigkeit und Druckfestigkeit aufweist, sodass die Eignung für Reparaturen bestehender Estriche wesentlich verbessert wird. Die Erfindung zielt weiter darauf ab, ein Verfahren der eingangs genannten Art zu schaffen, mit welchem überaus dünne, hochfeste Gießbelege aufgebracht werden können.

Zur Lösung dieser Aufgabe besteht der pumpfähige selbstnivellierende Magnesiaestrich neben den bekannten Bestandteilen kaustisch gebrannte Magnesia, Magnesiumchlorid, Wasser und Quarzsand erfindungsgemäß im wesentlichen darin, dass organische Dispersionen im Verhältnis zu MgCl₂ in einer Menge von 1:4 bis 1:1 Gew.%-Teilen zugesetzt sind. Dadurch, dass organische Dispersionen in Mengen von 1:4 bis 1:1 Gew.%-Teilen im Verhältnis zu Magnesiumchlorid eingesetzt werden, gelingt es überraschenderweise, die Kapillarporösität wesentlich herabzusetzen und insgesamt eine wesentlich homogenere Durchmischung der Zuschlagstoffe und insbesondere des Quarzsandes bzw. der kaustisch gebrannten Magnesia zu erzielen. In Zwangsmischern wird eine wesentlich homogenere Mischung in wesentlich kürzerer Zeit erzielt, sodass eine besonders gut pumpfähige Masse resultiert, bei welcher auch die Pumpfähigkeit bei geringeren Wasseranteilen noch aufrecht erhalten bleibt, sodass schnellere Trocknungszeiten nicht nur aufgrund der nunmehr möglichen verringerten Schichtstärken erzielt werden. Mit Vorteil enthält die pumpfähige Mischung organische Dispersionen aus der Gruppe Styrolacrylsäureester, Acrylsäureester, Ethylenvinylchlorid, Polyvenylester, Polyvenylacetat und Styrolbutadien.

Durch die verringerte Kapilarporosita bei dem neuen selbstnivellierenden Magnesiaestrich entsteht gleichzeitig eine bessere Wasserbeständigkeit als bei herkömmlichen Magnesiaböden. Bei konventionellen Magnesiaestrichen dringt Wasser durch die offenen Kapillarporen und zerstört sukzessive die Sorelbindung. Daher gilt der herkömmliche Magnesiaestrich nicht als wasserbeständig und kann daher in vielen Bereichen nicht zum Einsatz kommen. Bei dem neuen pumpfähigen selbstnivellierenden Magnesiaestrich ist durch den besseren Kapillarverschluss eine bessere Wasserabweisung bzw. -beständigkeit gegeben.

Ein wesentlicher Aspekt bei der Zielsetzung, eine höhere Druckfestigkeit und eine höhere Biegezugfestigkeit zu erzielen, besteht auch darin, dass eine optimierte Sieblinie für Magnesia und Quarzsand zum Einsatz gelangt. Es wurde festgestellt, dass das Material bei geringerem Grobanteil in der Sieblinie wesentlich bessere Eigenschaften in Bezug auf Druckfestigkeit und Biegezugfestigkeit aufweist. Erfindungsgemäß kommen mit Vorteil entsprechend fein vermahlene Mehle oder auch Glasmikrokugeln zum Einsatz, welche aufgrund ihrer Kugelform eine besonders bevorzugte Kornform aufweisen. Mit Vorteil enthält die pumpfähige Mischung Quarzsand in einer Körnung von 0,3 bis 0,1 mm und 10 bis 15 Gew.% des Quarzsandes als Quarzmehl mit einer Korngröße kleiner 0,1 mm, wobei insbesondere in besonders vorteilhafter Weise die pumpfähige Mischung 1 bis 5 Gew.% Glasmikrokugeln mit Korngröße kleiner 0,2 mm enthalten kann.

Die organischen Dispersionen werden in entsprechend in Wasser dispergierter Form in vorteilhafter Weise eingesetzt, wobei mit Vorteil die organischen Dispersionen mit einem Körpergehalt von 45 bis 55 Gew.% eingesetzt werden.

In besonders vorteilhafter Weise kann der pumpfähige selbstnivellierende Magnesiaestrich noch Additive und insbe-sondere Entschäumer in Mengen von 0,05 Gew.% bis 1,5 Gew.% bezogen auf die Mischung enthalten. Als Additive kommen besonders bevorzugt polyethermodifizierte Polydimethylsiloxane, Emulsionen paraffinbasischer Mineralöle oder hydrophober Komponenten, Propylenglykol und/oder Tripropylenglykolmethylether in Betracht.

Die Aufbringung des Magnesiaestrichs in dünner Schicht erfolgt bevorzugt, wie eingangs erwähnt, unter Verwendung einer Haftbrücke. Mit Vorteil wird erfindungsgemäß hierbei so verfahren, dass als Haftbrücke Epoxidharze, insbesondere zweikomponentige Epoxidharze aufgetragen werden und dass eine pumpfähige, organische Dispersionen enthaltende Magnesiaestrichzusammensetzung aufgetragen wird, sobald die Haftbrücke transparent wird und noch klebrig ist. Eine derartige Haftbrücke auf der Basis von zweikomponentigen Epoxidharzen zeichnet sich durch verbesserte Chloridbeständigkeit aus und neigt daher nicht zu Reaktionen nach dem Aufbringen des pumpfähigen selbstnivellierenden Magnesiaestichs. Aufgrund der verbleibenden Klebrigkeit und der hohen Biegezugfestigkeit des aufgegossenen Belags wird eine flächig feste Verbindung gewährleistet, welche die Rissneigung des Belags noch weiter minimiert.

Prinzipiell wird bei der Aufbringung derartiger Gießbeläge wie folgt vorgegangen. Zunächst wird der Untergrund entsprechend vorbereitet, wobei die zu grundierende Fläche trocken sein muss. Insbesondere sollte die Restfeuchte in aller Regel auf unter 4 % beschränkt werden. Naturgemäß muss der Untergrund staub-, fett- und ölfrei sowie fest und tragfähig sein.

Bei der erfindungsgemäßen pumpfähigen selbstnivellierenden Magnesiaestrichrezeptur kann in aller Regel auf weitere aufwändige Bearbeitungen des Untergrunds, wie Kugelstrahlen oder Schleifen, verzichtet werden. Es wird unmittelbar das aus den beiden Komponenten gemischte Epoxidharz aufgetragen, wobei die beiden Komponenten der Grundierung im vorgegebenen Mischungsverhältnis zusammengegeben und in einem elektrischen Rührwerk homogen vermischt werden. Je nach Saugfähigkeit des Untergrunds werden 50 bis 100 Gew.% Wasser hinzugegeben und nochmals homogenisiert. Diese Haftbrücke wird in der Folge auf die Verlegefläche gegossen und gleichmäßig dünn verteilt, wofür kurzflorige Walzen verwendet werden können. Das Aufbringen der pumpfähigen selbstnivellierenden Magnesiaestrichmischung erfolgt, sobald die Grundschicht transparent geworden ist und noch leicht klebt.

Auch die Komponenten des Belagsmaterials werden in einem Dissolvermischer und homogenisiert. Die Masse wird in der Folge auf die klebrige Grundierung gegossen und kann mit einem Stiftrakel verteilt werden. Es ist möglich, den Oberflächeneffekt durch entsprechende mechanische Bearbeitung wie beispielsweise eine Nachbehandlung mit einem Nagelbrett den gewünschten Erfordernissen anzupassen. Eine nachträgliche Oberflächenglättung ist bei der erfindungsgemäßen Magnesiaestrichzubereitung nicht erforderlich. Eine Versiegelung kann bereits 24 Stunden nach der Verlegung des Belags aufgebracht werden.

Der fertige Magnesiaestrich zeichnet sich durch Druckfestigkeiten von ca. 70 N/mm² und Biegezugfestigkeiten von ca. 15 N/mm² aus. Die Dichte wurde bei 20° C mit ca. 2,0 g/cm³ bestimmt. Mit der Kunststoffdispersion kann auch die elektrische Leitfähigkeit entsprechend erhöht werden und es ist ohne weiteres möglich, Leitfähigkeitsmesswerte in der Größenordnung von 2 bis 7 MOhm zu erzielen, sodass derartige Belege auch als antistatische Belege Verwendung finden können.

## Patentansprüche

1. Pumpfähiger selbstnivellierender Magnesiaestrich enthaltend kaustisch gebrannte Magnesia, MgCl₂, Wasser und Quarzsand, **dadurch gekennzeichnet, dass** organische Dispersionen im Verhältnis zu MgCl₂ in einer Menge von 1:4 bis 1:1 Gew.%-Teilen zugesetzt sind.

2. Pumpfähiger selbstnivellierender Magnesiaestrich nach Anspruch 2, **dadurch gekennzeichnet, dass** die pumpfähige Mischung organische Dispersionen aus der Gruppe Styrolacrylsäureester, Acrylsäureester, Ethylenvinylchlorid, Polyvenylester, Polyvenylacetat und Styrolbutadien enthält.

3. Pumpfähiger selbstnivellierender Magnesiaestrich nach Anspruch 1 oder 2, **dadurch gekennzeichnet, dass** die pumpfähige Mischung Quarzsand in einer Körnung von 0,3 bis 0,1 mm und 10 bis 15 Gew.% des Quarzsandes als Quarzmehl mit einer Korngröße kleiner 0,1 mm enthält.

4. Pumpfähiger selbstnivellierender Magnesiaestrich nach Anspruch 1, 2 oder 3, **dadurch gekennzeichnet, dass** die organischen Dispersionen mit einem Körpergehalt von 45 bis 55 Gew.% eingesetzt werden.

5. Pumpfähiger selbstnivellierender Magnesiaestrich nach einem der Ansprüche 1 bis 4, **dadurch gekennzeichnet, dass** die pumpfähige Mischung 1 bis 5 Gew.% Glasmikrokugeln mit Korngröße kleiner 0,2 mm enthält.

6. Pumpfähiger selbstnivellierender Magnesiaestrich nach einem der Ansprüche 1 bis 5, **dadurch gekennzeichnet, dass** die pumpfähige Mischung Additive, insbesondere Entschäumer in Mengen von 0,05 Gew.% bis 1,5 Gew.% bezogen auf die Mischung enthält.

7. Pumpfähiger selbstnivellierender Magnesiaestrich nach Anspruch 6, **dadurch gekennzeichnet, dass** als Additive polyethermodifizierte Polydimethylsiloxane, Emulsionen paraffinbasischer Mineralöle oder hydrophober Komponenten, Propylenglykol und/oder Tripropylenglykolmethylether eingesetzt sind.

8. Verfahren zum Aufbringen dünnschichtiger Magnesiaestriche, bei welchem auf den trockenen und staubfreien Untergrund eine Haftbrücke aufgetragen und anschließend der Magnesiaestrich aufgetragen wird, **dadurch gekennzeichnet, dass** als Haftbrücke Epoxidharze, insbesondere zweikomponentige Epoxidharze aufgetragen werden und dass eine pumpfähige, organische Dispersionen enthaltende Magnesiaestrichzusammensetzung aufgetragen wird, sobald die Haftbrücke transparent wird und noch klebrig ist.
